# EUROPEAN PATENT SPECIFICATION

(11) **EP 0 555 981 B1**
(45) Date of publication and mention of the grant of the patent: **15.11.1995**
(21) Application number: 93300756.9
(22) Date of filing: 02.02.1993
(51) Int. Cl.: F16L 37/084

(54) **Improvements in or relating to tube couplings**
Verbesserungen an Rohrverbindungen
Perfectionnements aux raccords de tuyaux

(30) Priority: 03.02.1992 GB 9202268
(43) Date of publication of application: 18.08.1993
(73) Proprietor: Guest, John Derek, Maidenhead, Berkshire SL6 2EX (GB)
(72) Inventor: Guest, John Derek, Maidenhead, Berkshire SL6 2EX (GB)
(74) Representative: Bayliss, Geoffrey Cyril

(56) References cited:
- EP-A- 0 306 126
- EP-A- 0 484 690
- WO-A-88/06252
- DE-A- 3 924 173
- US-A- 4 730 856
- US-A- 4 964 658

## Description

The invention relates to tube coupling as is particularly although not exclusively applicable to tube couplings of the form described and illustrated in U.K. Patent Publication Nos. 1520742, 1573757, 2007322.

This invention provides a tube coupling comprising a coupling body having a throughway open at one end of the body to receive a tube, a locking device mounted in and projecting from the open end of the body to receive and hold a tube in the coupling body, the locking engagement being released by depressing the device into the throughway, a cup-shaped cap engageable over the coupling body from said one end thereof with the base of the cap overlying said end of the body and engageable with the projecting locking device to depress the locking device for release of the tube, the base of the cap having an opening through which the tube may pass, first sealing means for sealing the base of the cap to the tube passing through the base into the coupling body and second sealing means for sealing the lip of the cap to the coupling body to prevent ingress of dust or external liquids into the space enclosed by the cap and coupling body.

Preferably means are provided for retaining the cap on the coupling body with limited sliding movement to permit the base of the cap to move towards and away from said one end of the coupling body to depress the locking device into the throughway to release the tube when required and said first and second sealing means are arranged to accommodate the movement of the cap.

By way of example the coupling body may have a portion formed with a cylindrical outer periphery and the cap may have a cylindrical wall engageable with the cylindrical portion of the coupling body.

In the latter arrangement the means to retain the cap on the coupling body for limited movement of the cap may comprise a projection on the inner surface of the wall of the cap engageable in a recess in the cylindrical wall of the coupling body extending lengthwise of the wall to permit limited movement of the projection and thereby the cap over the wall.

More specifically the projection may comprise an annular rib encircling the wall of the cup and the recess is a corresponding annular form having a width extending lengthwise of the coupling body sufficient to provide the requisite movement of the cap.

In any of the above arrangements the second sealing means for sealing the lip of the cup to the tube coupling body may comprise an annular sealing member mounted in a recess in the tube coupling body adjacent to said cylindrical portion over which the cap moves and having an encircling frusto-conical sealing flange which bears on the lip of the cap, the flange being formed from a flexible material to accommodate the movement of the cap along the coupling body.

Preferably the annular ring and flange are formed from elastomeric material.

Also in any of the above arrangements the first sealing means may be mounted on the base of the cup to engage a tube extending through the aperture in the base.

In one embodiment the base may be formed with an annular recess in the aperture in the base within the thickness of the base and an O-ring seal is mounted in the recess to engage the tube.

In a further arrangement the opening in the base may be formed with a raised annular sealing rib to engage the tube to be inserted through the aperture in the base.

In yet a further arrangement the base of the cap may be formed with a spigot projecting on the opposite side of the base to the coupling body and a resilient sealing ring is mounted on the spigot having a frusto-conical sealing flange projecting therefrom to engage the surface of a tube to be inserted through the base.

The following is a description of some specific embodiments of the invention, reference being made to the accompanying drawings in which:
Figure 1 is a sectional view through a tube coupling having a cap sealed both to the coupling body and to a tube inserted in the coupling body;
Figure 2 is a similar view to Figure 1 showing a different form of seal between the cap and tube;
Figure 3 shows a modified form of cap with a different form of seal between the cap and tube;
Figure 4 illustrates a modification of the cap of the embodiment of Figure 2; and
Figure 5 illustrates yet a further sealing arrangement.

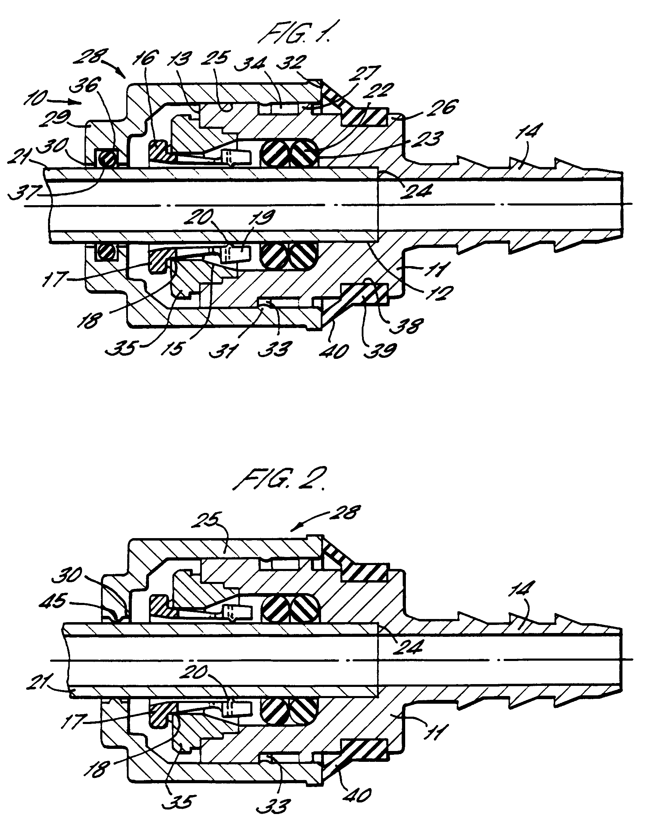

Referring firstly to Figure 1 of the drawings, there is shown a tube coupling indicated generally by the reference numeral 10 comprising a tube coupling body 11 having a throughway 12 extending into the coupling body from one end 13 thereof and a spigot 14 at the other end for connection to a further device.

The throughway at the end 13 of the coupling body has an annular collar 35 inserted therein which is formed with a cam surface 15 around its inner periphery which tapers towards the open end of the coupling body. A collet 16 is located in the collar having an annular head 17 located externally of the collar and has a plurality of resilient fingers 18 projecting therefrom through the collar with enlarged end portions 19 to engage the tapered cam surface 15. The inner surfaces of the end portions 19 have projecting teeth 20 to engage the outer surface of a tube 21 inserted into the throughway in the coupling body through the collet and by drawing the tube slightly outwardly of the throughway, the enlarged end portions 19 of the collet fingers are engaged with the cam surface 15 and forced into gripping engagement with the tube 21 to present extraction of the tube.

A pair of O-ring seals 22 are mounted side-by-side in the throughway supported by an annular shoulder 23 in the throughway to seal with the outer surface of the tube 21 and the throughway is further formed with an annular end stop 24 with which the end of the tube is engageable to limit insertion of the tube into the throughway.

It will be appreciated that depressing the collet into the throughway as shown in Figure 1 will release the gripping engagement of the enlarged end portions 19 of the collet fingers with the tube to allow the tube to be extracted from the throughway.

The coupling body 11 has a main cylindrical outer portion 25 having a reduced diameter portion 26 connected thereto by a step 27. A cap indicated generally at 28 is engaged over the coupling body from said one end 13. The cap comprises a base 29 having a central opening 30 through which the tube 21 can extend, a peripheral wall 31 and terminating in annular lip 32. The peripheral wall of the cap is a sliding fit on the cylindrical outer surface 25 of the coupling body. The cap has an inwardly projecting annular rib 33 adjacent the lip and a cylindrical portion of the body is formed with a somewhat wider annular recess 34 around its periphery in which the rib is a snap-fit to provide a limited movement of the cap over the coupling body sufficient to allow the inner side of the base 29 of the coupling body to engage the projecting head of the collet to depress the collet into the coupling body and allow the tube 21 to be released therefrom.

The base 29 of the cap is formed with a thickened wall section and the aperture 30 is formed with an annular groove 36 containing an O-ring seal 37 for engaging and sealing with the outer periphery of the tube to prevent ingress of moisture, dust or other extraneous material or liquids between the tube and base of the cap. Likewise, the reduced diameter portion 26 of the coupling body is formed with an annular groove 38 in which the base 39 of an annular seal is mounted having an upstanding frusto-conical shaped sealing flange 40 which bears against the lip 32 of the cap. The flange 40 accommodates the sliding movement of the cap to remain in sealing engagement therewith throughout its travel.

Thus, the cap is completely sealed at its lip to the coupling body and at its base to the tube to prevent ingress of extraneous liquids or other materials into the space enclosed between the cap and the coupling body which could cause corrosion of or otherwise damage the operation of the locking device whilst at the same time permitting release of the locking device when the tube is to be released from the coupling body. Moreover the O-ring seal 37 in the cover provides a vibration absorbing device which prevents rattling of the tube against the cap 28 which is of particular benefit where metal tubing is used.

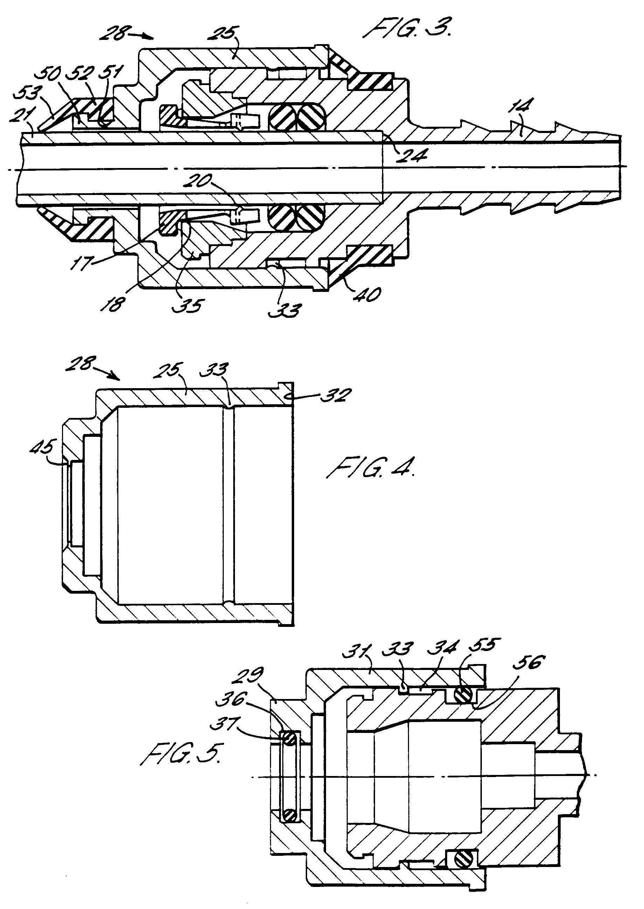

Figure 2 shows a similar arrangement to that of Figure 1 except that a different form of seal between the aperture and the base and the tube is provided in the form of an integral upstanding rib encircling the inner periphery of the aperture 30 and the base to bear against the surface of the tube. A further form of rib is shown in the modified arrangement of Figure 4.

Figure 3 shows yet a further form of seal between the base and tube in which the base has an integral spigot projecting on the opposite side of the base to the coupling body and formed with an encircling groove 51 in which an annular elastomeric seal 52 is mounted having a frusto-conical sealing flange 53 projecting therefrom to engage the surface of the tube 21. The arrangement is otherwise similar to that described with reference to Figure 1 above.

Figure 5 of the drawings shows yet a further arrangement in which the seal 39, 40 for the lip of the cap is replaced by an O-ring seal 55 mounted in an annular groove 56 encircling outer portion 25 of the coupling body adjacent to the annular recess 34. The O-ring engages and seals with the inner surface of the cap adjacent the lip and accommodates the limited movement of the cap along. The base of the cap is sealed with the tube inserted in the coupling body as described with reference to Figure 1.

## Claims

1. A tube coupling comprising a coupling body (11) having a throughway (12) open at one end (13) of the body to receive a tube (21), a locking device (19) mounted in and projecting from the open end of the coupling body to receive and hold a tube in the body, the locking engagement being released by depressing the device into the throughway, a cup-shaped cap (28) engageable over the coupling body from said one end thereof with the base (29) of the cap overlying said end of the body and engageable with the projecting locking device to depress the locking device for release of the tube, the base of the cap having an opening (30) through which the tube may pass, first sealing means (36) for sealing the base of the cap to the tube passing through the base into the coupling body and second sealing means (40) for sealing the lip (32) of the cap to the coupling body to prevent ingress of dust or external liquids into the space enclosed by the cap and coupling body.

2. A coupling body as claimed in Claim 1, wherein means are provided for retaining the cap on the coupling body with limited sliding movement to permit the base of the cap to move towards and away from said one end of the coupling body to depress the locking device into the throughway to release the tube when required and said first and second sealing means are arranged to accommodate the movement of the cap.

3. A coupling body as claimed in Claim 2, wherein the coupling body has a portion formed with a cylindrical outer periphery and the cap has a cylindrical wall engageable with the cylindrical portion of the coupling body.

4. A tube coupling as claimed in Claim 3, wherein the means to retain the cap on the coupling body for limited movement of the cap comprise a projection on the inner surface of the wall of the cap engageable in a recess in the cylindrical wall of the coupling body extending lengthwise of the wall to permit limited movement of the projection and thereby the cap over the wall.

5. A tube coupling as claimed in Claim 4, wherein the projection comprises an annular rib encircling the wall of the cup and the recess is of corresponding annular form having a width extending lengthwise of the coupling body sufficient to provide the requisite movement of the cap.

6. A tube coupling as claimed in any of the preceding claims, wherein the second sealing means for sealing the lip of the cup to the tube coupling body comprise an annular sealing member mounted in a recess in the tube coupling body adjacent to said cylindrical portion over which the cap moves and having an encircling frust-conical sealing flange which bears on the lip of the cap, the flange being formed from a flexible material to accommodate the movement of the cap along the coupling body.

7. A tube coupling as claimed in Claim 6, wherein the annular ring and flange are formed from elastomeric material.

8. A tube coupling as claimed in any of Claims 1 to 5, wherein the second sealing means comprise an O-ring seal mounted in an annular groove encircling the coupling body to engage the inner surface of the cup adjacent the mouth of the cap.

9. A tube coupling as claimed in any of the preceding claims, wherein the first sealing means is mounted on the base of the cup to engage a tube extending through the aperture in the base.

10. A tube coupling as claimed in Claim 9, wherein the base is formed with an annular recess in the aperture in the base within the thickness of the base and an O-ring seal is mounted in the recess to engage the tube.

11. A tube coupling as claimed in Claim 9, wherein the opening in the base is formed with a raised annular sealing rib to engage the tube to be inserted through the aperture in the base.

12. A tube coupling as claimed in Claim 9, wherein the base of the cap is formed with a spigot projecting on the opposite side of the base to the coupling body and a resilient sealing ring is mounted on the spigot having a frusto-conical sealing flange projecting therefrom to engage the surface of a tube to be inserted through the base.

## Patentansprüche

1. Rohrkupplung mit einem Kupplungskörper (11) mit einem Durchlaß (12), der an einem Ende des Körpers für die Aufnahme eines Rohres (21) offen ist, einer Sperrvorrichtung (19), die im offenen Ende des Kupplungskörpers montiert ist und vorsteht, um ein Rohr im Körper aufzunehmen und zu halten, wobei der Sperreingriff durch Drücken der Vorrichtung in den Durchlaß freigegeben wird, einer napfförmigen Kappe (28) über den Kupplungskörper von seinem einen Ende her in Eingriff bringbar ist, wobei die Basis (29) der Kappe das Ende des Körpers überlappt und mit der vorstehenden Sperrvorrichtung in Eingriff bringbar ist, um die Sperrvorrichtung zum Freigeben des Rohres zu drücken, wobei die Basis der Kappe eine Öffnung (30) aufweist, durch welche das Rohr passieren kann, erste Dichtungsmittel (36) zum Abdichten der Basis der Kappe gegen das durch die Basis in den Kupplungskörper geführte Rohr und zweite Dichtungsmittel (40) zum Abdichten der Tülle (32) der Kappe gegen den Kupplungskörper, um das Eintreten von Staub oder externen Flüssigkeiten in den von der Kappe und dem Kupplungskörper umschlossenen Raum zu verhindern.

2. Kupplungskörper gemäß Anspruch 1, wobei Mittel vorgesehen sind, um die Kappe auf dem Kupplungskörper mit begrenzter Gleitbewegung zurückzuhalten, um zu ermöglichen, daß die Basis der Kappe auf das eine Ende des Kupplungskörpers zu oder von diesem weg verschoben werden kann, um die Sperrvorrichtung in den Durchlaß zu drücken, um das Rohr freizugeben, wenn dies erforderlich ist, und die ersten und zweiten Dichtungsmittel so angeordnet sind, daß sie die Verschiebung der Kappe aufnehmen.

3. Kupplungskörper gemäß Anspruch 2, wobei der Kupplungskörper einen Abschnitt mit einem zylindrischen Außenumfang aufweist und die Kappe eine zylindrische Wand aufweist, die mit dem zylindrischen Abschnitt des Kupplungskörpers in Eingriff bringbar ist.

4. Rohrkupplung nach Anspruch 3, wobei die Mittel zum Zurückhalten der Kappe auf dem Kupplungskörper für eine begrenzte Bewegung der Kappe einen Vorsprung an der inneren Fläche der Kappenwand aufweisen, der in eine sich in Längsrichtung der Wand erstreckenden Aussparung in der zylindrischen Wand des Kupplungskörpers eingreifen kann, um eine begrenzte Bewegung des Vorsprungs und damit der Kappe entlang der Wand zu erlauben.

5. Rohrkupplung nach Anspruch 4, wobei der Vorsprung eine ringförmige Rippe aufweist, die die Kappenwand umgibt, und die Aussparung eine entsprechende Ringform mit einer in Längsrichtung des Kupplungskörper sich erstreckenden Breite aufweist, die für die notwendige Verschiebung der Kappe ausreichend breit ist.

6. Rohrkupplung nach einem der vorstehenden Ansprüche, wobei die zweiten Dichtungsmittel zum Abdichten der Tülle der Kappe gegen den Rohrkupplungskörper ein ringförmiges Dichtungselement aufweisen, das in einer Aussparung im Rohrkupplungskörper in der Nähe des zylindrischen Abschnittes, über welchem die Kappe läuft, montiert ist und einen umlaufenden kegelstumpfförmigen Dichtungsflansch hat, der auf der Tülle der Kappe aufliegt, wobei der Flansch aus einem flexiblen Material gebildet ist, um die Verschiebung der Kappe entlang dem Kupplungskörper aufzunehmen.

7. Rohrkupplung nach Anspruch 6, wobei der Dichtungsring und der Flansch aus elastomerem Material gebildet sind.

8. Rohrkupplung nach einem der Ansprüche 1 bis 6, wobei die zweiten Dichtungsmittel eine O-Ring-Dichtung aufweisen, die in einer ringförmigen Nut montiert ist, welche den Kupplungskörper umgibt, um mit der Innenfläche der Kappe in der Nähe der Mündung der Kappe zusammenzuwirken.

9. Rohrkupplung nach einem der vorstehenden Ansprüche, wobei die ersten Dichtungsmittel auf der Basis der Kappe montiert sind, um an einem Rohr anzuliegen, das sich durch die Öffnung der Basis erstreckt.

10. Rohrkupplung nach Anspruch 9, wobei die Basis in ihrer Öffnung mit einer ringförmigen Aussparung in der Materialstärke der Basis versehen ist und in der Aussparung eine O-Ring-Dichtung montiert ist, um mit dem Rohr zusammenzuwirken.

11. Rohrkupplung nach Anspruch 9, wobei die Öffnung in der Basis mit einer erhabenen, ringförmigen Dichtungsrippe versehen ist, die an dem Rohr, welches durch die Öffnung in der Basis eingesetzt wird, anliegt.

12. Rohrkupplung nach Anspruch 9, wobei die Basis der Kappe mit einem Zapfen ausgebildet ist, der an der dem Kupplungskörper gegenüberliegenden Seite der Basis vorsteht, und auf dem Einpreßzapfen ein elastischer Dichtungsring montiert ist, der einen vorstehenden, kegelstumpfförmigen Dichtflansch hat, welcher mit der Oberfläche eines Rohres zusammenwirkt, das durch die Basis eingesetzt wird.

## Revendications

1. Raccord de tuyaux comprenant un corps de raccord (11) ayant un passage traversant (12) ouvert au niveau d'une extrémité (13) du corps pour recevoir un tuyau (21), un dispositif de verrouillage (19) monté dans l'extrémité ouverte du corps de raccord et s'étendant depuis cette dernière pour recevoir et maintenir le tuyau dans le corps, le contact de verrouillage étant libéré en enfonçant le dispositif dans le passage traversant, un chapeau en forme de coupelle (28) pouvant venir en contact sur le corps de raccord depuis ladite extrémité de ce dernier, la base (29) du chapeau recouvrant ladite extrémité du corps et pouvant venir en contact avec le dispositif de verrouillage en saillie afin d'enfoncer le dispositif de verrouillage et de libérer le tuyau, la base du chapeau comportant une ouverture (30) à travers laquelle le tuyau peut passer, un premier moyen d'étanchéité (36) pour assurer l'étanchéité entre la base du chapeau et le tuyau passant à travers la base dans le corps de raccord et un second moyen d'étanchéité (40) pour assurer l'étanchéité entre le bord (32) du chapeau et le corps de raccord et empêcher la pénétration de poussière ou de liquides externes dans l'espace délimité par le chapeau et le corps de raccord.

2. Corps de raccord selon la revendication 1, dans lequel des moyens sont prévus pour autoriser le chapeau a effectuer sur le corps de raccord un déplacement coulissant limité pour permettre à la base du chapeau de s'approcher et de s'écarter de ladite extrémité du corps de raccord afin d'enfoncer le dispositif de verrouillage dans le passage traversant et de libérer le tuyau lorsque cela est nécessaire et dans lequel lesdits premier et second moyens d'étanchéité sont agencés pour s'adapter au déplacement du chapeau.

3. Corps de raccord, selon la revendication 2, dans lequel le corps de raccord possède une partie comportant une périphérie extérieure cylindrique et dans lequel le chapeau possède une paroi cylindrique pouvant venir en contact avec la partie cylindrique du corps de raccord.

4. Raccord de tuyaux selon la revendication 3, dans lequel les moyens pour autoriser le chapeau à effectuer sur le corps de raccord un déplacement limité comprennent une partie en saillie sur la surface intérieure de la paroi du chapeau pouvant venir en contact dans un évidement dans la paroi cylindrique du corps de raccord s'étendant dans le sens de la longueur de la paroi pour permettre le déplacement limité de la partie en saillie et, de ce fait, du chapeau sur la paroi.

5. Raccord de tuyaux selon la revendication 4, dans lequel la partie en saillie comprend une nervure annulaire entourant la paroi du chapeau et dans lequel l'évidement est d'une forme annulaire correspondante avec une largeur dans le sens de la longueur du corps de raccord, suffisante pour réaliser le déplacement demandé du chapeau.

6. Raccord de tuyaux selon l'une quelconque des revendications précédentes, dans lequel le second moyen d'étanchéité assurant l'étanchéité entre le bord du chapeau et le corps de raccord de tuyau comprend un élément d'étanchéité annulaire monté dans un évidement du corps de raccord de tuyau adjacent à ladite partie cylindrique sur laquelle le chapeau se déplace et ayant une bride d'étanchéité tronconique périphérique qui prend appui sur le bord du chapeau, la bride étant formée en une matière souple pouvant s'adapter au déplacement du chapeau le long du corps de raccord.

7. Raccord de tuyaux selon la revendication 6, dans lequel la bague annulaire et la bride sont formées en une matière élastique.

8. Raccord de tuyaux selon l'une quelconque des revendications 1 à 5, dans lequel le second moyen d'étanchéité comprend un joint torique d'étanchéité monté dans une rainure annulaire entourant le corps de raccord et venant en contact avec la surface intérieure du chapeau adjacente à l'ouverture du chapeau.

9. Raccord de tuyaux selon l'une quelconque des revendications précédentes, dans lequel le premier moyen d'étanchéité est monté sur la base du chapeau et vient en contact avec un tuyau s'étendant à travers l'ouverture dans la base.

10. Raccord de tuyaux selon la revendication 9, dans lequel la base comporte un évidement annulaire dans l'ouverture de sa base dans l'épaisseur de la base, un joint torique d'étanchéité étant monté dans l'évidement et venant en contact avec le tuyau.

11. Raccord de tuyaux selon la revendication 9, dans lequel l'ouverture formée dans la base présente une nervure d'étanchéité annulaire remontée pour introduire le tuyau à insérer à travers l'ouverture dans la base.

12. Raccord de tuyaux selon la revendication 9, dans lequel la base du chapeau est pourvue d'un embout cannelé s étendant sur le côté opposé de la base vers le corps de raccord et dans lequel une bague d'étanchéité élastique est montée sur l'embout cannelé et comporte une bride d'étanchéité tronconique s'étendant depuis ce dernier pour venir en contact avec la surface d'un tuyau à introduire à travers la base.
